# EUROPEAN PATENT SPECIFICATION

(11) **EP 1 305 925 B1**
(45) Date of publication and mention of the grant of the patent: **06.06.2007**
(21) Application number: 01950158.4
(22) Date of filing: 06.07.2001
(51) Int. Cl.: H04L 29/06, H04Q 11/04

(54) **A METHOD AND AN ARRANGEMENT RELATING TO COMMUNICATIONS SYSTEMS**
VERFAHREN UND ANORDNUNG FÜR KOMMUNIKATIONSSYSTEME
PROCEDE ET SYSTEME CONCERNANT DES SYSTEMES DE COMMUNICATION

(30) Priority: 07.07.2000 SE 0002586
(43) Date of publication of application: 02.05.2003
(73) Proprietor: TELEFONAKTIEBOLAGET LM ERICSSON (publ), 164 83 Stockholm (SE)
(72) Inventor: SÖDERBERG, Johan, S-977 52 Lulea (SE); HEDLUND, Mikael, S-972 38 Lulea (SE)
(74) Representative: Kühn, Friedrich Heinrich
(86) International application number: PCT/SE2001/001590
(87) International publication number: WO 2002/005514

(56) References cited:
- EP-A- 0 909 073
- EP-A2- 0 873 038
- WO-A1-98/12840
- WO-A1-99/21340
- WO-A1-99/59071
- US-A- 5 774 552
- US-A- 5 996 011
- STEVEN M. BELLOVIN AND WILLIAM R. CHESWICK: "Network Firewalls" 2460 IEEE COMMUNICATIONS MAGAZINE, vol. 32, no. 9, September 1994 (1994-09), pages 50-57, XP000476555

## Description

### FIELD OF INVENTION

The present invention relates to the field of data communications systems. More specifically, the invention relates to a method and a communication unit of blocking undesired traffic in a data communications system.

The invention relates particularly, but not exclusively, to a method of blocking undesired data packets that are sent on a network which uses packet switching and where the network protocol is preferably represented by Internet Protocol (IP).

The invention can be applied on both wireless communications systems, for instance GPRS and WCDMA, and traditional so-called fixed communications systems constructed by fibre cables for instance.

### DESCRIPTION OF THE BACKGROUND ART

In a packet-switching data communications system information is sent in packets, wherein each packet travels over the network with the best of efforts with respect to speed and routing, as opposed to a circuit switched network in which a connection is set up and all information sent precisely in accordance with the pre-established route.

In packet switching networks, the data packet utilises addresses in order to reach its final destination, in other words each packet is marked with a terminal address and the packets then dispatched. The network then ensures that the packets arrive at the correct receiver. Each packet will normally also include a sender address, so that the sender of the packet will be known.

Thus, information can be sent in a packet switched network at any time whatsoever and to all nodes that are connected to the network, without first contacting the receiver.

It is known, for instance from PCT-application W09826533, to filter data packets by to data packets an attribute which indicates whether the receipt of the packets is desired or undesired. This attribute may be the address of the sender of the packet.

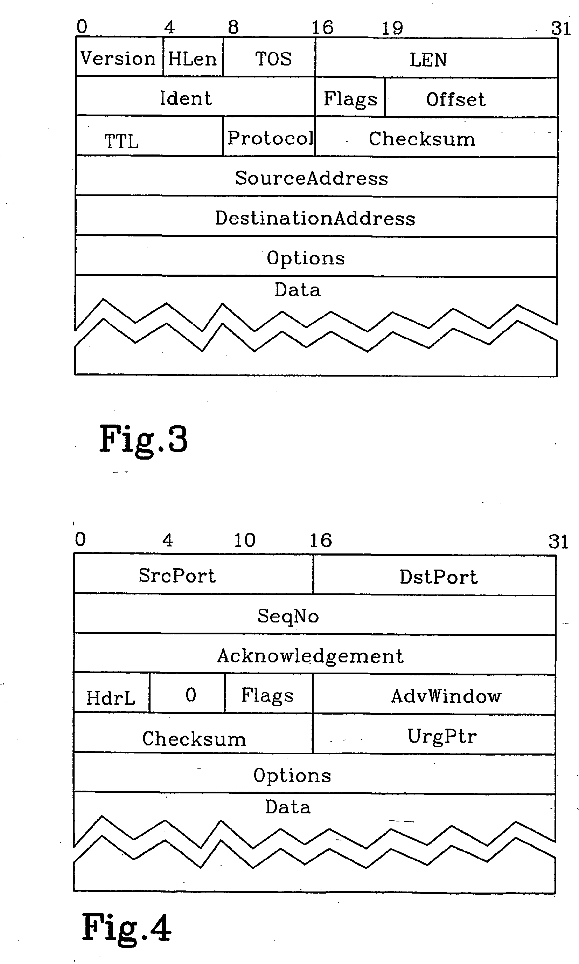

Document "Network Firewalls" from 2460 IEEE COMMUNICATIONS MAGAZINE, Vol. 32, No.9, September 1994, pages 50-57 describes methods for providing firewall service in a computer network. In paragraphs [0037]-[0040] in this document, a so called Dependency Mask or condition is described, in particular with reference to Fig 3 and 8. It is mentioned in paragraph [0037] that "allowing a connection back to a user only if there is a proper forward connection concurrently active." There is a condition that the connection back to the user should be allowed only if the forward connection is "concurrently active". The present invention allows a connection back to a user unconditionally only if the address of the user has been registered in the serving node. The case described in paragraph [0037] of the cited document presumes a separate, additional network session (lines 31-32).

PCT-application WO99/21340 describes methods for providing firewall service in a computer network. It is mentioned that in TCP-conversation, a message is allowed only from an internal host and that an outsider (i.e. not an internal host) cannot initiate a connection. An internal host is identified by saying "Our hosts" and this our-host-condition is specified by a machine number or a similar identification. The present invention does not separate internal and external nodes/hosts to a certain node/host.

### SUMMARY OF THE INVENTION

One problem with packet switching network is that whosoever can send whatsoever to whomsoever. The data packet is forwarded in the network without first checking whether or not the receiver will actually have the information. This does not occur in circuits switched communications systems in which there is first set up a connection between two parties. This can result in a user being drowned in a large quantity of undesired data that loads a resource-limited system unnecessarily.

When payment is expected for the amount of data received, another problem is that whosoever can cause an economic injury by sending the data packet to a user who is then forced to pay for the receipt of undesired and worthless information.

Thus, the object of the present invention is to provide a solution to the aforesaid problems. In brief, this object is realised according to claims 1 and 12 by believing that each terminal address to which data is sent, for example an e- mail receiver or in response to a request on a web page, is considered to be reliable. Data is then accepted solely from these accepted addresses, i.e. from reliable senders, and all other data packets are discarded.

More specifically, the checking and filtering of data packets is normally effected automatically. A list of accepted senders is created automatically, by investigating the terminal address of outgoing packets and placing this address in the list. A user may also insert beforehand addresses from which he is willing to receive data packets. The sender address of respective incoming packets is then compared with the addresses on the list. The invention can be applied in any network node whatsoever.

One advantage afforded by the invention is that one avoids receiving undesired data from unknown or unreliable senders.

Another advantage is that there is no risk of being required to pay for information that has not been requested.

The invention will now be described in more detail with reference to preferred exemplifying embodiments thereof and also with reference to the accompanying drawings.

### BRIEF DESCRIPTION OF THE DRAWINGS

Figure 1 shows parts of a packet switching network.
Figure 2 illustrates the various link layers in the OSI-model.
Figure 3 shows an IP-header for IP-version 4.
Figure 4 shows a TCP-header.
Figure 5 illustrates how the three-way handshake algorithm functions.
Figure 6 is a flow chart for outgoing packets according to one embodiment of the invention.
Figure 7 is a flow chart for incoming packets according to one embodiment of the invention.

### DESCRIPTION OF PREFERRED EMBODIMENTS

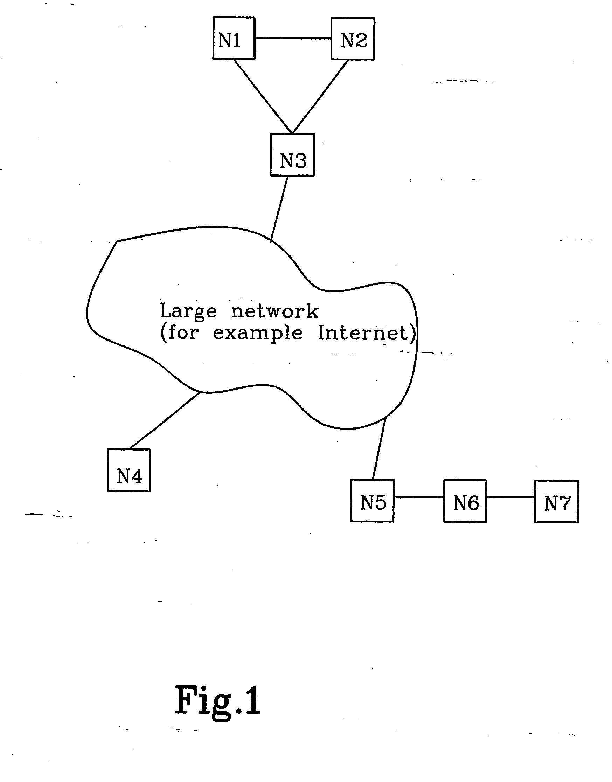

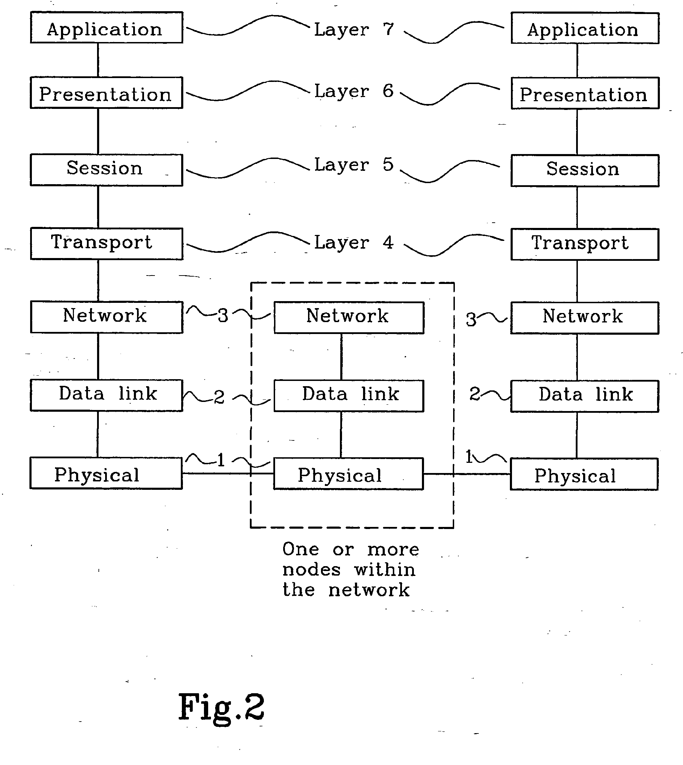

Figure 1 shows the possible configuration of parts of a packet switching network. The example shows how several nodes (N1, N2, N3...) are interlinked in one or more networks. For example, the nodes N1-N3 and N5-N7 may form two separate small networks which, in turn, are coupled together with a larger network, for instance with Internet. Each small network can use different types of technology, for example FDDI, Ethernet or ATM. In Figure 2, the nodes N1-N3 might be able to use ATM within their small network, whereas the nodes N5-N7 might be able to use Ethernet within their small network.

When these smaller data networks are coupled together, there is created a larger data network. Thus, Internet is actually a logic network that consists of a collection of physical networks, i.e. a collection of smaller networks that use different technologies.

These smaller networks are coupled together with the aid of routers and gateways. A router ensures that data packets are sent along correct routes between the networks, whereas a gateway manages the communication between different types of protocols, for instance so that an ATM-network is able to communicate with an Ethernet-network.

The OSI-model shown in Figure 2 describes the various layers that are included in a packet switching communications system. The bottom Layer 1 is the physical layer that specifies transportation of bits over the physical medium. V.24, V.34 and G.703 are examples of Layer 1 standards.

There then follows Layer 2 which is the data link layer that specifies frames and physical addresses. Ethernet, Token Ring and High level Data Link Control (HDLC) are examples of Layer 2 standards. Layer 3 is the network layer that manages routing, logic addresses and data packet fragmentation. Internet Protocol (IP) and Internetwork Packet Exchange (IPX) are possible examples in this regard.

These three lowermost Layers 1-3 are, as shown in Figure 2, implemented in all network nodes, including network switches and all nodes coupled along said networks.

Layer 4 is the transport layer that is normally implemented solely in the end nodes. User Datagram Protocol (UDP) and Transmission Control Protocol (TCP) are examples of protocols in the transport layer.

Layer 5 is the sessions layer that, inter alia, checks that the session has not been terminated before all data has been transmitted. Examples in this regard may be netbios and winsock.

Layer 6 is the presentation layer that specifies coding of data. HyperText Marup Language (HTML) and American Standard Code for Information Interchange (ASCII) are examples in this regard.

The top Layer 7 is where the actual applications are implemented, such as e-mail and file transfers. Examples in this regard are telnet, File Transfer Protocol (FTP), Simple Mail Transfer Protocol (SMPT) and HyperText Transport Protocol (HTTP).

Figure 3 illustrates the construction of an IP-header for IP-version 4. An Ipv4 header consists of several 32-bit words. The first word includes Version which indicates the version of IP used. Hlen indicates the length of the entire header. TOS (Type Of Service) is conceived for use for extra services, for instance giving priority to faster transportation.

The field Protocol concerns which higher-layer protocol manages the IP-packet, examples of such protocol being TCP or UDP. This field is thus examined to see whether or not TCP was used, and therewith also examined to see whether or not SYN and ACK were sent, as is carried out in one embodiment of the invention.

A checksum is a sum that is calculated by discerning the whole of the IP-header as a number of mutually summated 16-bit words. If this field does not agree with the computation carried out upon arrival of the packet, the packet is discarded.

The SourceAddress reveals the address from which the packet is sent, i.e. the origin of the packet, this being required in order to be able to reply to a message. The address of origin may, for instance, be an IP-address, such as 130.240.193.75.

The DestinationAddress reveals the address to which-the packet shall be sent, in other words the terminal address. This address is used by each router in making a decision and determining the route along which the packet shall be forwarded in the network. The receiver address may, for instance, be an IP-address, such as 136.225.151.252. When IP is used in conjunction with the invention, it is this field together with the aforesaid source address field that is used to ascertain whether or not the data packet shall be accepted.

Although options is not normally used, it can, however, be used to indicate a particular route through the network, and Data is the actual payload data that may consist of the subject matter to the dispatch, for instance, text, pictures or speech.

Figure 4 shows the construction of a TCP-header. The TCP-header also consists of several 32-bit words. The first field SrcPort indicates the port that was used in the node from which the packet was sent. DstPort denotes the corresponding port in the node to which the packet shall be sent. Because TCP is a byte-orientated protocol, each byte of data will have a sequence number, which is given by Seq No. Acknowledgement indicates which sequence is next in line, i.e. the sequence number accepted next by the receiver. HdrL denotes the length of the header.

In the field Flags, which consists of 6 bits, the content of the packet is disclosed in slightly more detail, where the bit order is as follows: URG-ACK-PUSH-RESET-SYN-FIN, wherewith each bit has the following connotation:
URG which is a flag for urgent data conceived for use in signalling important messages concerning traffic;
The ACK-bit (010000 in Flags), which is the flag that states whether or not valid information is found in the Acknowledgement field;
PUSH, which is used when wishing to send collected data directly, without waiting to fill a complete packet, PUSH being used for instance, in telnet where each written character is sent directly;
RESET which indicates that the receiver of data has obtained erroneous information, for instance an unexpected segment with the wrong sequence number or the wrong Checksum, and therewith wishes to terminate the connection;
SYN-bit (000010 in Flags), which are used when establishing a TCP-connection; and
FIN, which is used when a connection shall be terminated.

AdvWindow indicates the size of the transmission window used, i.e. how much data is sent before a receiving acknowledgement can be expected. Checksum is a sum that is calculated by summating the contents of the header, so as to ascertain whether or not this content is in agreement with the received content. UrgPtr indicates the number of bytes of urgent data (if URG is placed in Flags). TCP-choice can be specified in options, and the Data-field is the payload data sent.

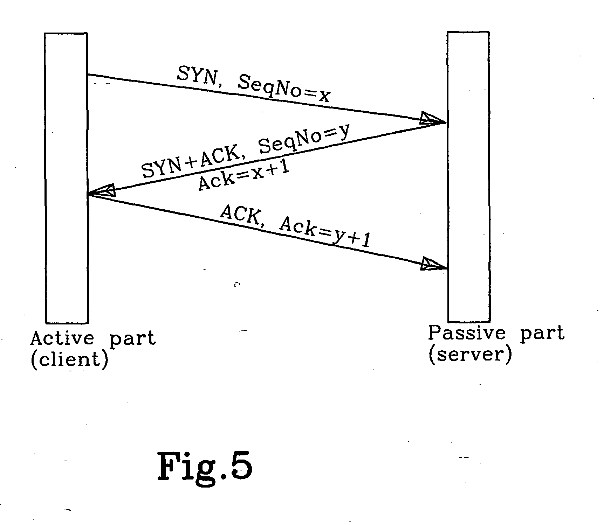

Figure 5 is a schematic image of the so-called three way handshake algorithm used by TCP for establishing a connection. The client commences by sending to the server a segment, (Flags = SYN, SeqNo=x) that indicates which sequence number the client intends to use. The server then responds with an acknowlegement (Flags = ACK, SeqNo=y) of the client's sequence number and an own sequence number (Flags = SYN, Ack=x+1) that the server intends to use. Finally, the client responds with a third segment (ACK, Ack=y+1) that confirms the server's sequence number.

This algorithm is used between all end nodes that send data therebetween, regardless of whether it involves two clients, two servers, or one server and one client. Although the handshaking algorithm shown by way of example is for TCP, it will be understood that other handshake algorithms may alternatively be used in accordance with the invention, for instance a WAP handshake algorithm.

According to one embodiment of the invention, only SYN/ACK is studied in order to ascertain whether or not packets arriving from this session will be accepted. This reduces the number of outgoing packets that need to be checked. All that is required is to look when a connection is established, therewith obviating the need to check outgoing packets in said session. ?

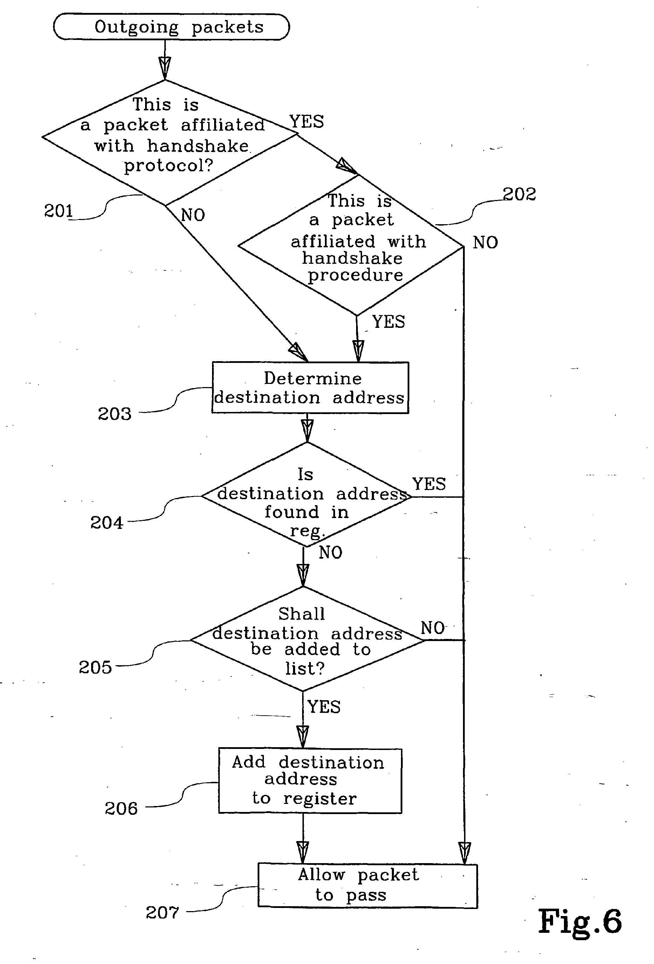

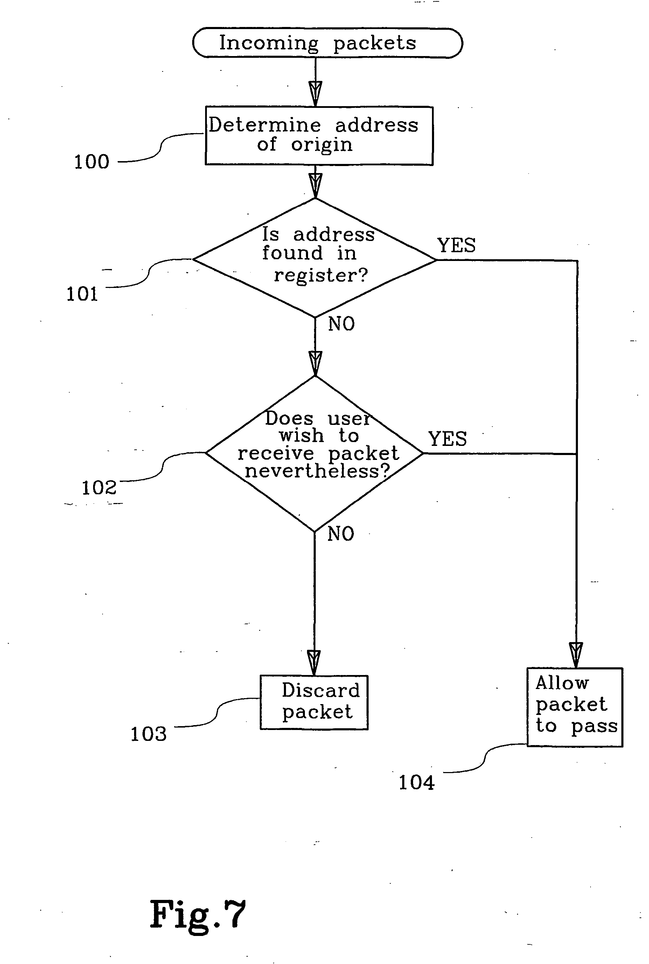

Figures 1-5 now give a background that leads to the invention itself, i.e. how data packets are filtered. This is described below chiefly with reference to Figures 6 and 7.

Figure 6 is a flow chart for outgoing data packets in one embodiment of the invention. The first step 201 involves ascertaining whether or not data packets are affiliated with a handshake protocol. The second step 202 involves ascertaining whether or not an outgoing data packet belongs to a handshake procedure, which when TCP is used is shown, for instance, in the abovementioned field Flags, where SYN and/or ACK may be given. These two steps can be carried out within the concept of the invention to reduce the number of outgoing data packets that shall be examined.

The third step 203 involves examining the destination address of the data packet, which, when Internet Protocol (IP) is used, can be found in the DestinationAddress of the IP-header, which states the address to which each data packet shall be sent.

The next step 204 involves finding the destination address of the outgoing data packet in the list of accepted addresses.

Step 205 is implemented when the response in the preceding step 204 is NEGATIVE, meaning that the address is not included in the list. The user is then asked whether or not the destination address of the outgoing data packet shall be included in the list.

Step 206 involves including the address in the list, if the user answers YES to the question.

Step 207 involves releasing the packet for transportation out in the network. This step can follow step 204, 205 or 206, depending on the answers given to the aforesaid questions and the result of the list scan, or whether or not automatic updating of the list shall be used instead of asking a question of the user in this regard.

Figure 7 is a flow chart for incoming data packets in one embodiment of the invention. The first step 100 involves examining the address of origin of the data packet. This can be seen, for instance, in the SourceAddress field of the IP-header when using Internet Protocol.

The next step 101 involves looking for the address in the list of accepted addresses.

Step 102 is carried out when the address cannot be found in the preceding step 101, meaning that the sender is unknown/not accepted.

The user is then asked whether or not he is willing to receive the data packet nevertheless.

Step 103 is carried out when the user states in the preceding step 102 that he does not wish to receive the packet. The packet will then be erased. Alternatively, this step is carried out immediately after step 101 when the address cannot be found and the user does not wish to ask this question for each unknown sender.

Step 104, which means that receipt of the packet in the node is avoided, may take place after several steps (101 or 102), depending on whether or not the address is found in the list or depending on the answer given to said question.

The list of accepted addresses of origin might include both addresses statically inserted in the list and addresses that are generated automatically. This enables a user to create the list beforehand or to update the list with accepted addresses of origin. Alternatively, the list can be created or updated automatically by including the addresses to which data packets are sent automatically in the list, in accordance with the invention.

The person applying the invention may, for instance, be a person who uses a wireless connection to the Internet, via node N4 in Figure 1. The user then sends an email to a user connected via node N6 in Figure 1, and requests home a number of web pages from Node N3. The user then considers the addresses of nodes N6 and N3 to be reliable. If a file is sent from a person who does not have one of the aforesaid addresses of origin, the file is erased before our person receives the file on his computer. Thus, in the case of this example, the invention can be implemented in a node upstream of our user, for instance in the penultimate node - which may be the base station - prior to the file being sent to our user in a wireless node. This is done in order to save space on the limited bandwidth in the air interface.

It will be understood that the invention is not restricted to the aforedescribed and illustrated exemplifying embodiments thereof and that modifications can be made within the scope of the accompanying claims.

## Claims

1. A method of blocking data traffic received by a first node (N4) from a second node (N3) in a communications system that includes at least two nodes (N1-N4), wherein communication between said nodes takes place in a packet switching network, said first node sending data packets each having a destination address, comprising the following steps with regard to incoming data packets to said first node (N4):
- determining (100) the address of origin of an incoming data packet;
- comparing (101) the address of origin of the incoming data packet with a list of accepted addresses of origin;
- allowing the incoming data packet to pass through (104) when said data packet has an accepted address of origin; or
- erasing (103) said data packet if its address of origin is not accepted;
**characterised in that** said accepted addresses are determined in the following steps:
- determining (203) the destination adress of an outgoing packet from said first node (N4)
- investigating (204) whether said destination address is found in said list; and
- adding (206) said destination address to said list if not already in said list.

2. A method according to Claim 1, **characterised by** preceding said erasion of the data packet with a question (102) asking whether the user is willing to receive a data packet from an unaccepted address of origin.

3. A method to Claim 1, **characterised by** preceding addition (206) of a destination address with a question (204) asking whether or not the user wishes to include the destination address as an accepted address of origin.

4. A method according to claim 2-3, **characterised by** carrying out the aforesaid steps (203-207) with respect to outgoing data packets solely during the handshake algorithm for establishing a connection, and preceding said steps by the following steps of:
- determining (201) whether or not an outgoing data packet belongs to a handshake protocol; and
- determining (202) whether or not an outgoing data packet is included in a handshake procedure.

5. A method according to any one of Claims 1-4, **characterised in that** the network protocol is comprised of the Internet Protocol IP.

6. A method according to Claim 5, **characterised in that** the transport protocol is comprised of the User Datagram Protocol UDP.

7. A method according to Claim 5, **characterised in that** the transport protocol is the Transmission Control Protocol TCP.

8. A method according to any one of Claims 1-7, **characterised in that** the communication system is comprised of a system of the type TDMA, Time Division Multiple Access, with packet data addition.

9. A method according to any one of Claims 1-7, **characterised in that** the communication system is a PDC, Personal Digital Cellular, type system.

10. A method according to any one of Claims 1-7, **characterised in that** the communication system is a WCDMA, Wideband Code Division Multiple Access, type system.

11. A method according to Claim 8, **characterised in that** the packet data addition is a GPRS, General Packed Radio Service.

12. A communications unit of blocking data traffic received by a first node (N4) from a second node (N3) in a communications system that includes at least two nodes (N1-N4), wherein communication between said nodes takes place in a packet switching network, said first node sending data packets each having a destination address, comprising, with regard to incoming data packets to said first node (N4),
- means for determining (100) the address of origin of an incoming data packet;
- means for comparing (101) the address of origin of the incoming data packet with a list of accepted addresses of origin;
- means for allowing the incoming data packet to pass through when said packet has an accepted address of origin; or erasing said data packet if its address of origin is not accepted;
**characterized in that** said accepted addresses are determined by
- means for determining the destination adress of an outgoing packet from said first node,
- means for investigating whether said destination address is found in said list; and
- means for adding said destination address to said list if not already in said list.

13. A communications unit according to Claim 12, **characterised by** means for asking the user whether he/she is willing to receive a data packet from an unaccepted address of origin.

14. A communications unit according to Claim 12, **characterised by** means for asking the user whether or not he/she wishes to include a destination address to the list.

15. A communications unit according to any one of Claims 12-14, **characterised by** means for determining whether or not outgoing data packets belong to a handshake protocol, and by means for determining whether or not said outgoing data packets are included in a handshake procedure.

## Patentansprüche

1. Verfahren zum Abblocken von Datenverkehr, der von einem ersten Knoten (N4) empfangen wird, von einem zweiten Knoten (N3) in einem Kommunikationssystem, welches wenigstens zwei Knoten (NI-N4) einschließt, wobei eine Kommunikation zwischen den Knoten in einem Paketvermittlungsnetz stattfindet, wobei der erste Knoten Datenpakete sendet, die jeweils eine Zieladresse aufweisen, umfassend die folgenden Schritte in Bezug auf ankommende Datenpakete an dem ersten Knoten (N4):
- Bestimmen (100) der Adresse des Ursprungs eines ankommenden Datenpakets;
- Vergleichen (101) der Adresse des Ursprungs des ankommenden Datenpakets mit einer Liste von akzeptierten Adressen des Ursprungs;
- Zulassen eines Durchgangs (104) des Datenpakets, wenn das Datenpaket eine akzeptierte Adresse des Ursprungs aufweist; oder
- Löschen (103) des Datenpakets, wenn dessen Adresse des Ursprungs nicht akzeptiert ist;
**dadurch gekennzeichnet, dass** die akzeptierte Adressen in den folgenden Schritten bestimmt werden:
- Bestimmen (203) der Zieladresse eines abgehenden Pakets von dem ersten Knoten (N4);
- Untersuchen (204), ob die Zieladresse in der Liste gefunden wird; und
- Hinzufügen (206) der Zieladresse zu der Liste, wenn noch nicht in der Liste.

2. Verfahren nach Anspruch 1, **dadurch gekennzeichnet, dass** der Löschung des Datenpakets eine Frage (102) vorausgeht, die anfragt, ob der Benutzer wünscht, dass ein Datenpaket von einer nicht akzeptierten Adresse des Ursprungs empfangen wird.

3. Verfahren nach Anspruch 1 , **dadurch gekennzeichnet, dass** der Hinzufügung (206) einer Zieladresse eine Frage (204) vorausgeht, die anfragt, ob der Benutzer wünscht oder nicht, dass die Zieladresse als eine akzeptierte Adresse des Ursprungs eingeschlossen wird.

4. Verfahren nach Anspruch 2-3, **dadurch gekennzeichnet, dass** die vorangehenden Schritte (203-207) in Bezug auf abgehende Datenpakete ausschließlich während des Handshake-Algorithmus zum Herstellen einer Verbindung ausgeführt werden, und dass den Schritten die folgenden Schritte vorausgehen:
- Bestimmen (201), ob ein abgehendes Datenpaket zu einem Handshake-Protokoll gehört oder nicht, und
- Bestimmen (202), ob ein abgehendes Datenpaket in einer Handshake-Prozedur eingeschlossen ist oder nicht.

5. Verfahren nach irgendeinem der Ansprüche 1-4, **dadurch gekennzeichnet, dass** das Netzprotokoll aus dem Internet Protokoll IP gebildet ist.

6. Verfahren nach Anspruch 5, **dadurch gekennzeichnet**, das Transportprotokoll aus dem User Datagramm Protokoll UDP gebildet ist.

7. Verfahren nach Anspruch 5, **dadurch gekennzeichnet, dass** das Transportprotokoll das Transmission Control Protokoll TCP ist.

8. Verfahren nach irgendeinem der Ansprüche 1-7, **dadurch gekennzeichnet, dass** das Kommunikationssystem aus einem System des Typs TDMA, Time Division Multiple Access, mit einer Paketdatenhinzufügung gebildet ist.

9. Verfahren nach irgendeinem der Ansprüche 1-7, **dadurch gekennzeichnet, dass** das Kommunikationssystem ein System des Typs PDC, Personal Digital Cellular, ist.

10. Verfahren nach irgendeinem der Ansprüche 1-7, **dadurch gekennzeichnet, dass** das Kommunikationssystem ein System des WCDMA, Wideband Code Divison Multiple Access, Typs ist.

11. Verfahren nach Anspruch 8, **dadurch gekennzeichnet, dass** die Paketdatenhinzufügung ein GPRS, General Packed Radio Service, ist.

12. Kommunikationseinheit zum Abblocken von Datenverkehr, der von einem ersten Knoten (N4) empfangen wird, von einem zweiten Knoten (N3) in einem Kommunikationssystem, welches wenigstens zwei Knoten (Nl-N4) einschließt, wobei eine Kommunikation zwischen den Knoten in einem Paketvermittlungsnetz stattfindet, wobei der erste Knoten Datenpakete sendet, die jeweils eine Zieladresse aufweisen, umfassend, in Bezug auf ankommende Datenpakete an dem ersten Knoten (N4),
- Mittel zum Bestimmen (100) der Adresse des Ursprungs eines ankommenden Datenpakets;
- Mittel zum Vergleichen (101) der Adresse des Ursprungs des ankommenden Datenpakets mit einer Liste von akzeptierten Adressen des Ursprungs;
- Mittel zum Zulassen eines Durchgangs des Datenpakets, wenn das Datenpaket eine akzeptierte Adresse des Ursprungs aufweist; oder Löschen des Datenpakets, wenn dessen Adresse des Ursprungs nicht akzeptiert ist;
**dadurch gekennzeichnet, dass** die akzeptierte Adressen bestimmt werden durch
- Mittel zum Bestimmen der Zieladresse eines abgehenden Pakets von dem ersten Knoten;
- Mittel zum Untersuchen, ob die Zieladresse in der Liste gefunden wird; und
- Mittel zum Hinzufügen der Zieladresse zu der Liste, wenn noch nicht in der Liste.

13. Kommunikationseinheit nach Anspruch 12, **gekennzeichnet durch** Mittel zum Befragen des Benutzers, ob er/sie wünscht, dass ein Datenpaket von einer nicht akzeptierten Adresse des Ursprungs empfangen wird.

14. Kommunikationseinheit nach Anspruch 12, **gekennzeichnet durch** Mittel zum Befragen des Benutzers, ob er/sie wünscht, dass eine Zieladresse in die Liste eingebaut wird.

15. Kommunikationseinheit nach irgendeinem der Ansprüche 12-14, **gekennzeichnet durch** Mittel zum Bestimmen, ob abgehende Datenpakete zu einem Handshake-Protokoll gehören oder nicht, und **durch** Mittel zum Bestimmen, ob die abgehenden Datenpakete in einer Handshake-Prozedur eingeschlossen sind oder nicht.

## Revendications

1. Procédé de blocage de trafic de données reçues par un premier noeud (N4) d'un second noeud (N3) dans un système de communication qui comprend au moins deux noeuds (N1-N4), dans lequel une communication entre lesdits noeuds a lieu dans un réseau de commutation par paquets, ledit premier noeud envoyant des paquets de données ayant chacun une adresse de destination, comprenant les étapes suivantes en ce qui concerne des paquets de données entrants audit premier noeud (N4):
- déterminer (100) l'adresse d'origine d'un paquet de données entrant;
- comparer (101) l'adresse d'origine du paquet de données entrant avec une liste d'adresses acceptées d'origine;
- autoriser au paquet de données entrant de traverser (104) lorsque ledit paquet de données a une adresse acceptée d'origine; ou
- effacer (103) ledit paquet de données si son adresse d'origine n'est pas acceptée;
**caractérisé en ce que** lesdites adresses acceptées sont déterminées dans les étapes suivantes:
- déterminer (203) l'adresse de destination d'un paquet sortant dudit premier noeud (N4)
- rechercher (204) si ladite adresse de destination se trouve dans ladite liste; et
- ajouter (206) ladite adresse de destination à ladite liste si elle n'est pas déjà dans ladite liste.

2. Procédé selon la revendication 1, **caractérisé par le fait que** l'avancement dudit effacement du paquet de données est précédé par une question (102) demandant si l'utilisateur désire recevoir un paquet de données d'une adresse d'origine non acceptée.

3. Procédé selon la revendication 1, **caractérisé par le fait que** l'addition (206) d'une adresse de destination est précédée d'une question (204) demandant si oui ou non l'utilisateur désire inclure l'adresse de destination comme une adresse d'origine acceptée.

4. Procédé selon la revendication 2-3, **caractérisé par le fait que** les susdites étapes (203-207) par rapport aux paquets de données sortants sont seulement effectuées pendant un algorithme de validation de transfert pour établir une connexion, et **par le fait que** lesdites étapes sont précédées par les étapes suivantes:
- déterminer (201) si oui ou non un paquet de données sortant appartient à un protocole de validation de transfert; et
- déterminer (202) si oui ou non un paquet de données sortant est compris dans une procédure de validation de transfert.

5. Procédé selon l'une quelconque des revendications 1 à 4, **caractérisé en ce que** le protocole de réseau est composé du protocole Internet IP.

6. Procédé selon la revendication 5, **caractérisé en ce que** le protocole de transport est composé du protocole de datagramme d'utilisateur UDP.

7. Procédé selon la revendication 5, **caractérisé en ce que** le protocole de transport est le protocole de commande de transmission TCP.

8. Procédé selon l'une quelconque des revendications 1 à 7, **caractérisé en ce que** le système de communication est composé d'un système d'accès multiple par répartition temporelle TDMA, avec une addition de données de paquets.

9. Procédé selon l'une quelconque des revendications 1 à 7, **caractérisé en ce que** le système de communication est un système de type cellulaire numérique personnel PDC.

10. Procédé selon l'une quelconque des revendications 1 à 7 , **caractérisé en ce que** le système de communication est un système du type à accès multiple par division de code à large bande WCDMA.

11. Procédé selon la revendication 8, **caractérisé en ce que** l'addition des données de paquets est un service radio général de paquets GPRS.

12. Unité de communications de blocage de trafic de données reçues par un premier noeud (N4) à partir d'un second noeud (N3) dans un système de communications qui comprend au moins deux noeuds (N1-N4), dans lequel la communication entre lesdits noeuds a lieu dans un réseau de commutation de paquets, ledit premier noeud envoyant des paquets de données ayant chacune une adresse de destination, comprenant, en ce qui concerne des paquets de données entrant ledit premier noeud (N4),
- un moyen pour déterminer (100) l'adresse d'origine d'un paquet de données entrant;
- un moyen pour comparer (101) l'adresse d'origine du paquet de données entrant avec une liste d'adresses d'origines acceptées;
- un moyen pour permettre au paquet de données entrant de traverser lorsque ledit paquet a une adresse d'origine acceptée; ou effacer ledit paquet si son adresse d'origine n'est pas acceptée;
**caractérisée en ce que** lesdites adresses acceptées sont déterminées par
- un moyen pour déterminer l'adresse de destination d'un paquet sortant à partir dudit premier noeud,
- un moyen pour investiguer si ladite adresse de destination est trouvée dans ladite liste, et
- un moyen pour ajouter ladite adresse de destination à ladite liste si elle n'est pas déjà dans ladite liste.

13. Unité de communications selon la revendication 12, **caractérisée par** un moyen pour demander à l'utilisateur s'il/elle désire recevoir un paquet de données à partir d'une adresse d'origine non acceptée.

14. Unité de communications selon la revendication 12, **caractérisée par** un moyen pour demander à l'utilisateur s'il/elle désire inclure une adresse de destination à la liste.

15. Unité de communications selon l'une quelconque des revendications 12 à 14, **caractérisée par** un moyen pour déterminer si oui ou non des paquets de données sortants appartiennent à un protocole de validation de transfert, et par un moyen pour déterminer si oui ou non lesdits paquets de données sortants sont compris dans une procédure de validation de transfert.
